# FASCICULE DE BREVET EUROPEEN

(11) **EP 3 395 676 B1**
(45) Date de publication et mention de la délivrance du brevet: **19.06.2019**
(21) Numéro de dépôt: 18166262.8
(22) Date de dépôt: 09.04.2018
(51) Int. Cl.: B64C 1/40, B64D 33/02, F02C 7/045, G10K 11/172

(54) **PANNEAU POUR LE TRAITEMENT ACOUSTIQUE COMPRENANT DES ALVEOLES CONTENANT CHACUNE UNE PLURALITE DE CONDUITS**
PANEEL ZUR SCHALLDÄMMUNG, DAS WABEN UMFASST, VON DENEN JEDE EINE VIELZAHL VON LEITUNGEN ENTHÄLT
ACOUSTIC TREATMENT PANEL COMPRISING CELLS, EACH CONTAINING A PLURALITY OF CONDUITS

(30) Priorité: 25.04.2017 FR 1753556
(43) Date de publication de la demande: 31.10.2018
(73) Titulaire: Airbus Operations S.A.S., 31060 Toulouse (FR)
(72) Inventeur: LAVIEILLE, Maud, 31170 TOURNEFEUILLE (FR); PORTE, Alain, 31770 COLOMIERS (FR); LALANE, Jacques, 31650 SAINT ORENS DE GAMEVILLE (FR)
(74) Mandataire: Gicquel, Olivier Yves Gérard

(56) Documents cités:
- EP-A1- 1 111 584
- WO-A1-99/35007
- FR-A1- 2 930 670
- US-A- 3 913 702

## Description

La présente demande se rapporte à un panneau pour le traitement acoustique comprenant des alvéoles contenant chacune une pluralité de conduits.

Un panneau pour le traitement acoustique comprend au moins une structure alvéolaire positionnée entre une couche réflectrice et une couche acoustiquement résistive poreuse en contact avec un environnement extérieur dans lequel se propagent des ondes sonores. Un tel panneau fonctionne selon le principe du résonateur d'Helmhotz. Ainsi, la structure alvéolaire comprend une pluralité d'alvéoles, qui forment chacune une cavité approximativement étanche, et la couche acoustiquement résistive poreuse comprend une pluralité de trous configurés pour faire communiquer l'environnement extérieur avec l'une des cavités.

Ce type de panneau est utilisé dans une nacelle d'un aéronef pour atténuer les bruits provenant d'une motorisation.

Pour atténuer les basses fréquences, le document US-3.887.031 décrit un panneau pour le traitement acoustique qui comprend dans chaque alvéole un conduit en forme d'entonnoir qui présente une première extrémité avec une section large obturée par une portion de la couche acoustiquement résistive poreuse et une deuxième extrémité avec une section réduite obturée par une portion de la couche réflectrice. Le conduit comporte une ouverture qui fait communiquer l'intérieur du conduit avec la zone délimitée par l'alvéole et le conduit. La section large de la première extrémité du conduit est sensiblement égale à la section de l'alvéole. Le document US 3,913,702 montre un panneau acoustique et divulgue le préambule de la revendication 1.

La présente invention vise à améliorer les performances des panneaux pour le traitement acoustique de l'art antérieur.

A cet effet, l'invention a pour objet un panneau pour le traitement acoustique comprenant une structure acoustiquement résistive poreuse en contact avec un environnement extérieur dans lequel s'écoulent des ondes sonores en fonctionnement, une couche réflectrice et au moins une structure alvéolaire positionnée entre la structure acoustiquement résistive poreuse et la couche réflectrice et configurée pour compartimenter une zone entre la structure acoustiquement résistive poreuse et la couche réflectrice en une pluralité d'alvéoles. Selon l'invention, chaque alvéole contient plusieurs conduits qui présentent chacun une première extrémité obturée par une portion de la structure acoustiquement résistive poreuse, une deuxième extrémité obturée par une portion de la couche réflectrice et au moins une ouverture écartée de la structure acoustiquement résistive poreuse et configurée pour faire communiquer l'intérieur et l'extérieur du conduit.

Le fait de prévoir plusieurs conduits dans chaque alvéole permet d'améliorer le traitement acoustique, en renforçant notamment l'atténuation des ondes sonores à basses fréquences et permet de renforcer la résistance à la compression du panneau pour le traitement acoustique au centre de chaque alvéole.

Selon d'autres caractéristiques relatives aux conduits :
- un ratio entre une section de l'alvéole et une section d'un conduit est supérieur ou égal à 10, de préférence supérieur à 20.
- chaque conduit a une section inférieure ou égale à 0,04 cm².
- chaque conduit a une section constante entre les première et deuxième extrémités.
- les conduits sont rigides.
- les alvéoles sont délimitées par des cloisons orientées selon une première direction et selon une deuxième direction perpendiculaire à la première direction et, dans chaque alvéole, les conduits sont positionnés selon des lignes parallèles à la première direction et selon des rangées parallèles à la deuxième direction.
- chaque conduit a une section circulaire avec un diamètre compris entre 0,5 et 2 mm.

Selon d'autres caractéristiques relatives aux ouvertures :
- chaque conduit comprend une unique ouverture qui se présente sous la forme d'une fente qui comprend une plus grande dimension orientée parallèlement à un axe du conduit.
- les ouvertures de tous les conduits d'une même alvéole sont identiques et s'étendent à partir de la couche réflectrice sur une longueur de l'ordre d'un tiers de la longueur totale des conduits.

L'invention a également pour objet un aéronef comprenant un panneau pour le traitement acoustique selon l'une des caractéristiques précédentes.

D'autres caractéristiques et avantages ressortiront de la description de l'invention qui va suivre, description donnée à titre d'exemple uniquement, en regard des dessins annexés sur lesquels :
- La figure 1 est une vue latérale d'un aéronef,
- La figure 2 est une coupe longitudinale d'une partie d'une entrée d'air d'une nacelle de l'aéronef visible sur la figure 1,
- La figure 3 est une coupe d'une alvéole d'un panneau pour le traitement acoustique qui illustre un premier mode de réalisation de l'invention,
- La figure 4 est une coupe d'une alvéole d'un panneau pour le traitement acoustique qui illustre un deuxième mode de réalisation de l'invention depuis un premier point de vue,
- La figure 5 est une coupe de l'alvéole visible sur la figure 4 depuis un deuxième point de vue, la couche réflectrice n'étant pas représentée,
- La figure 6 est une vue en perspective d'une partie d'un panneau pour le traitement acoustique qui illustre un autre mode de réalisation, la couche réflectrice n'étant pas représentée,
- Les figures 7A à 7D sont des sections d'un conduit qui illustrent différents modes de réalisation de l'invention,
- La figure 8 est une vue en perspective d'une bande pourvue d'un alignement de conduits qui illustre un mode de réalisation de l'invention,
- La figure 9 est une vue en perspective d'une partie d'un panneau pour le traitement acoustique qui comprend plusieurs bandes telles que visibles sur la figure 8,
- La figure 10 est une coupe de la partie du panneau pour le traitement acoustique visible sur la figure 9,
- La figure 11 est une vue en perspective d'une partie d'un panneau pour le traitement acoustique qui illustre un autre mode de réalisation depuis l'intérieur du panneau,
- La figure 12 est une vue en perspective du panneau pour le traitement acoustique visible sur la figure 11 depuis l'extérieur du panneau,
- La figure 13 est une coupe du panneau pour le traitement acoustique visible sur la figure 11,
- La figure 14 est une vue en perspective d'une bande pourvue de plusieurs alignements de conduits qui illustre un autre mode de réalisation de l'invention,
- La figure 15 est une vue de face d'un panneau pour le traitement acoustique qui illustre un autre mode de réalisation de l'invention, et
- La figure 16 est une coupe du panneau pour le traitement acoustique visible sur la figure 15.

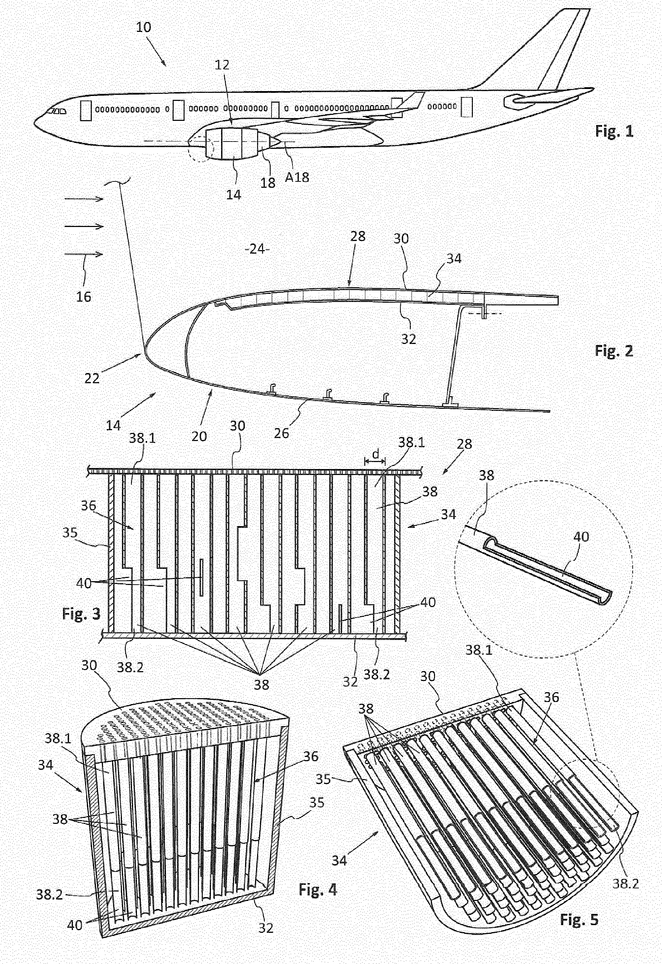

Comme illustré sur les figures 1 et 2, un aéronef 10 comprend plusieurs ensembles propulsifs 12 qui comportent chacun une nacelle 14 configurée pour canaliser un flux d'air 16 en direction d'une motorisation 18. A cet effet, la nacelle comprend une entrée d'air 20 qui présente, selon le sens d'écoulement du flux d'air 16, une lèvre 22 prolongée à l'intérieur par un conduit intérieur 24 pour canaliser le flux d'air 16 en direction de la motorisation 18 et à l'extérieur par une surface extérieure 26.

Pour limiter les nuisances sonores, le conduit intérieur 24 est formé, au moins en partie, par au moins un panneau pour le traitement acoustique 28. Généralement l'entrée d'air 20 comprend plusieurs panneaux pour le traitement acoustique 20 juxtaposés pour former le conduit intérieur 24.

Pour la suite de la description, une direction longitudinale est une direction parallèle à la direction du flux d'air 16 ou l'axe de la motorisation référencé A18. Une direction radiale est une direction perpendiculaire à l'axe de la motorisation A18. Une direction transversale est une direction perpendiculaire aux directions longitudinale et radiale. Un plan longitudinal est un plan passant par l'axe de la motorisation A18 et un plan transversal est un plan perpendiculaire à l'axe A18 de la motorisation.

Bien que décrit appliqué à une entrée d'air, le panneau pour le traitement acoustique de l'invention n'est en aucun cas limité à cette zone de l'aéronef. Il peut être positionné à d'autres endroits de l'aéronef 10 ou être utilisé pour d'autres applications.

Le panneau pour le traitement acoustique 28 comprend une structure acoustiquement résistive poreuse 30 en contact avec un environnement extérieur dans lequel s'écoulent le flux d'air 16 et des ondes sonores en fonctionnement, une couche réflectrice 32 et au moins une structure alvéolaire 34 positionnée entre la structure acoustiquement résistive poreuse 30 et la couche réflectrice 32.

La couche réflectrice 32 comprend au moins une plaque métallique ou en matériau composite, non poreuse.

La structure alvéolaire 34 est configurée pour compartimenter la zone entre la structure acoustiquement résistive poreuse 30 et la couche réflectrice 32 en une pluralité d'alvéoles 36. Chaque alvéole 36 est sensiblement étanche et délimitée par au moins une paroi latérale 35 qui forme un tube obturé à une première extrémité par une portion de la structure acoustiquement résistive poreuse 30 et à une deuxième extrémité par une portion de la couche réflectrice 32.

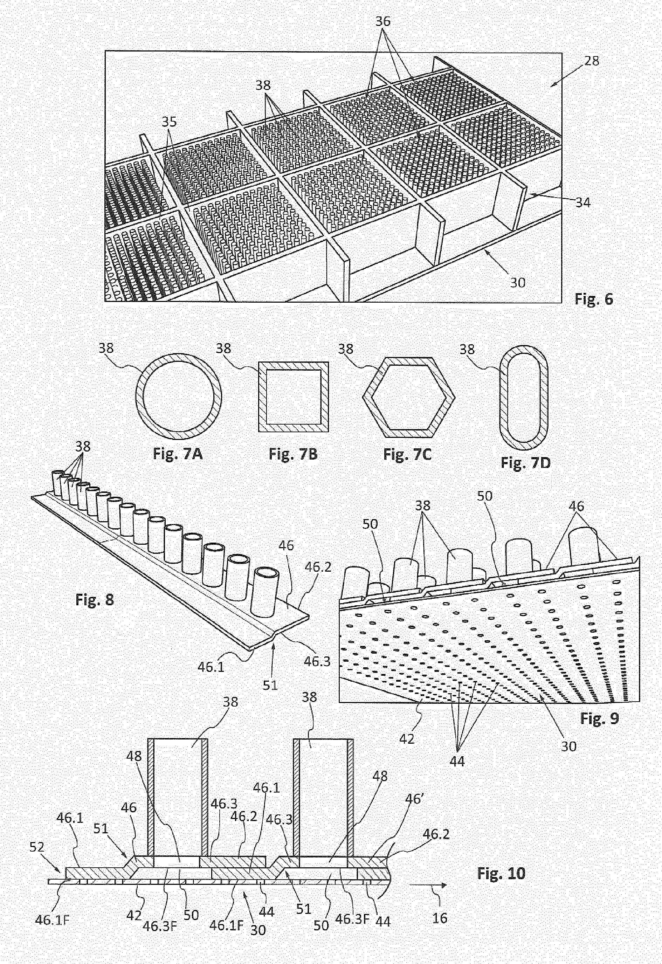

Selon les modes de réalisation, les alvéoles 36 ont des sections (dans un plan de coupe parallèle à la couche réflectrice 32) circulaires comme illustré sur les figures 4 et 5, carrées ou rectangulaires comme illustré sur la figure 6, hexagonales ou autres.

Pour donner un ordre de grandeur, chaque alvéole 36 a une section de l'ordre de 1 cm² ou plus.

La structure alvéolaire 34 peut être métallique ou en matériau composite.

Selon une caractéristique de l'invention, chaque alvéole 36 contient plusieurs conduits 38 qui présentent chacun une première extrémité 38.1 obturée par une portion de la structure acoustiquement résistive poreuse 30, une deuxième extrémité 38.2 obturée par une portion de la couche réflectrice 32 et au moins une ouverture 40 écartée de la structure acoustiquement résistive poreuse 30 et configurée pour faire communiquer l'intérieur et l'extérieur du conduit 38.

Le ratio entre la section de l'alvéole 36 et la section d'un conduit 38 est supérieur ou égal à 10, et de préférence supérieur à 20.

Chaque conduit 38 a une section inférieure ou égale à 0,04 cm². Chaque conduit 38 a une section constante entre les première et deuxième extrémités 38.1 et 38.2.

Selon un mode de réalisation, les conduits 38 sont rigides. Ils sont métalliques ou en matériau composite.

Selon un mode de réalisation, chaque conduit 38 comprend une unique ouverture 40 qui se présente sous la forme d'une fente dont la plus grande dimension est orientée parallèlement à l'axe du conduit 38. Chaque ouverture 40 s'étend sur une portion de la circonférence du conduit 38 inférieure ou égale à la moitié de la circonférence.

Selon un mode de réalisation visible sur les figures 4 et 5, les ouvertures 40 de tous les conduits 38 d'une même alvéole 36 sont identiques et s'étendent à partir de la couche réflectrice 32 sur une longueur de l'ordre d'un tiers de la longueur totale des conduits 38. Bien entendu, l'invention n'est pas limitée à ce mode de réalisation. Comme illustré sur la figure 3, pour une même alvéole, les ouvertures 40 peuvent être différentes et/ou positionnées différemment d'un conduit 38 à l'autre. Les conduits 38 et les ouvertures 40 peuvent tous être identiques dans une alvéole et différents d'une alvéole à l'autre.

Selon une configuration visible sur la figure 6, les alvéoles 36 ont chacune une section carrée ou rectangulaire et sont délimitées par des cloisons 35 orientées selon une première direction et selon une deuxième direction perpendiculaire à la première direction. Selon un mode de réalisation, la première direction est parallèle à la direction longitudinale.

Dans chaque alvéole, les conduits 38 sont positionnés selon des lignes parallèles à la première direction et selon des rangées parallèles à la deuxième direction.

Selon un mode de réalisation illustré par la figure 7A, chaque conduit 38 a une section circulaire avec un diamètre compris entre 0,5 et 2 mm.

Selon d'autres modes de réalisation illustrés par la figure 7B, 7C et 7D, chaque conduit 38 a respectivement une section carrée ou rectangulaire, hexagonale, elliptique.

Le fait de prévoir plusieurs conduits avec une faible section dans chaque alvéole permet de traiter les ondes sonores à basses fréquences et limite les risques d'écrasement du panneau acoustique au centre de chaque alvéole.

Selon une autre caractéristique, la structure acoustiquement résistive poreuse 30 comprend au moins une couche extérieure 42 qui est en contact avec le flux d'air 16 et qui présente des trous traversant 44, des bandes intérieures 46 comprenant des ouvertures 48 qui communiquent chacune avec l'intérieur d'une alvéole 36 via un conduit 38 et des canaux de connexion 50, intercalés entre la couche extérieure 42 et les bandes intérieures 46, qui communiquent d'une part avec au moins un des trous traversants 44 de la couche extérieure 42 et d'autre part avec au moins une des ouvertures 48 de l'une des bandes intérieures 46. Les canaux de connexion 50 permettent de garantir que les ouvertures 48 de faibles sections communiquent avec au moins un trou traversant 44 de la couche extérieure 42.

Selon les cas, la couche extérieure 42 est métallique ou en matériau composite ou comprend une superposition de plusieurs couches métalliques et/ou en matériau composite.

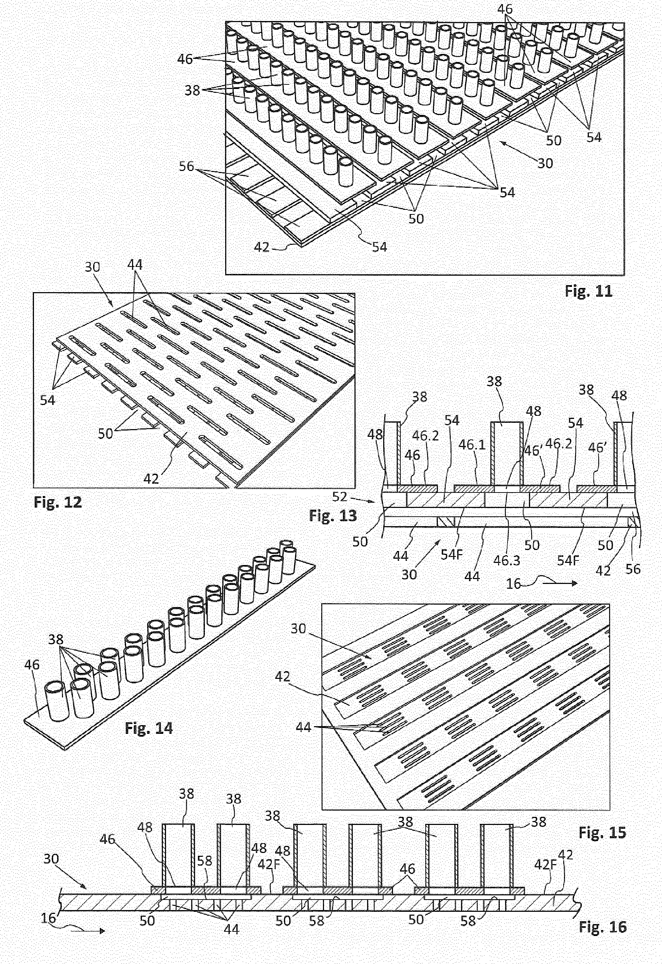

Selon les modes de réalisation, les trous traversants 44 sont circulaires, comme illustré sur la figure 9, et oblongs, comme illustré sur les figures 12 et 15.

Selon un mode de réalisation visible sur la figure 8, chaque bande intérieure 46 comprend un alignement de conduits 38. Selon un autre mode de réalisation visible sur la figure 14, chaque bande intérieure 46 comprend plusieurs alignements de conduits 38, agencés en quinconce. Pour chaque bande intérieure 46, les conduits 38 sont solidarisés à la bande intérieure 46 avant qu'elle ne soit assemblée avec d'autres bandes intérieures 46 ou d'autres éléments du panneau pour le traitement acoustique.

Les bandes intérieures 46 et les conduits 38 peuvent être métalliques ou en matériau composite et sont solidarisés par soudage, collage. En variante, chaque bande intérieure 46 et ses conduits 38 sont réalisés par fabrication additive.

Chaque bande 46 comprend deux bords latéraux 46.1 et 46.2 parallèles et une zone médiane 46.3 intercalée entre les bords latéraux 46.1 et 46.2 qui présente les ouvertures 48 communiquant avec les conduits 38.

Selon un premier mode de réalisation visible sur la figure 8, l'un des bords latéraux 46.2 présente un soyage 51. Les bandes intérieures 46 sont assemblées de manière étanche entre elles en superposant les bords latéraux 46.1 et 46.2 de deux bandes intérieures 46, 46' adjacentes pour former une couche intérieure 52, comme illustré sur la figure 10. En dehors des ouvertures 48, la couche intérieure 52 obtenue est étanche, ce qui contribue à rendre les alvéoles 36 étanches.

Selon ce mode de réalisation, lorsque les bandes intérieures 46 sont assemblées, les bords latéraux 46.1 des différentes bandes intérieures 46 forment des surfaces de contact 46.1F et les zones médianes 46.3 des bandes intérieures 46 sont décalées par rapport à ces surfaces de contact 46.1F et forment chacune une rigole 46.3F.

Ainsi, comme illustré sur la figure 10, lorsque la couche intérieure 52 est assemblée avec la couche extérieure 42, les zones médianes 46.3 des bandes intérieures 46 sont espacées de la couche intérieure 42, et chaque rigole 46.3F fermée par la couche extérieure 42 forme un canal de connexion 50.

Pour augmenter la section des canaux de connexion 50, des clinquants sont intercalés entre la couche intérieure 52 et la couche extérieure 42. Chaque clinquant se présente sous la forme d'une bande de matière. Ces clinquants sont parallèles les uns aux autres et sont espacés. Selon les configurations, les clinquants sont orientés parallèlement aux bords latéraux 46.1 et superposés à ces derniers ou sont orientés perpendiculairement aux bords latéraux 46.1.

Selon un deuxième mode de réalisation visible sur les figures 11 à 13, les bandes intérieures 46 sont planes et reliées entre elles par des bandes intercalaires 54 pour former une couche intérieure 52. Le bord latéral 46.1 d'une première bande intérieure 46 est superposé et relié, de manière étanche par tout moyen approprié, à l'un des bords d'un bande intercalaire 54, et le bord latéral 46.2 d'une deuxième bande intérieure 46'est superposé et relié, de manière étanche par tout moyen approprié, à l'autre bord de la bande intercalaire 54.

En dehors des ouvertures 48, la couche intérieure 52 obtenue est étanche ce qui contribue à rendre les alvéoles 36 étanches.

Chaque bande intercalaire 54 offre une surface de contact 54F. Les bandes intercalaires 54 étant espacées entre elles, la zone médiane 46.3 de chaque bande intérieure 46 délimite entre deux bandes intercalaires 54 une rigole 46.3F.

Ainsi, comme illustré sur la figure 11, lorsque la couche intérieure 52 est assemblée avec la couche extérieure 42, les zones médianes 46.3 des bandes intérieures 46 sont espacées de la couche intérieure 42 et chaque rigole 46.3F fermée par la couche extérieure 42 forme un canal de connexion 50.

Pour augmenter la section des canaux de connexion 50, des clinquants 56 sont intercalés entre les bandes intérieures 46 et la couche extérieure 42. Chaque clinquant 56 se présente sous la forme d'une bande matière. Les clinquants 56 sont parallèles les uns aux autres et sont espacés. Selon les configurations, les clinquants 56 sont orientés parallèlement aux bords latéraux 46.1 et superposés à ces derniers ou sont orientés perpendiculairement aux bords latéraux 46.1, comme illustré sur les figures 11 à 13.

Selon un troisième mode de réalisation visible sur les figures 15 et 16, la couche extérieure 42 comprend, sur sa face orientée vers les bandes intérieures 46, des rigoles 58 parallèles entre elles et espacées dans lesquelles débouchent au moins partiellement les trous traversants 44. Entre chaque rigole 58, la couche extérieure 42 comprend des surfaces de contact 42F qui forment une surépaisseur par rapport aux fonds des rigoles 58. Les bandes intérieures 46 sont assemblées avec la couche intérieure 42 de manière à fermer chaque rigole 58 pour obtenir des canaux de connexion 50. A cet effet, pour chaque rigole 58, le premier bord latéral 46.1 d'une bande intérieure 46 est relié de manière étanche à une première surface de contact 42F disposées d'un premier côté de la rigole 58, et le deuxième bord latéral 46.2 de la bande intérieure 46 est relié de manière étanche à une deuxième surface de contact 42F' disposée d'un deuxième côté de la rigole 58.

## Revendications

1. Panneau pour le traitement acoustique comprenant une structure acoustiquement résistive poreuse (30) en contact avec un environnement extérieur dans lequel s'écoulent des ondes sonores en fonctionnement, une couche réflectrice (32) et au moins une structure alvéolaire (34) positionnée entre la structure acoustiquement résistive poreuse (30) et la couche réflectrice (32) et configurée pour compartimenter une zone entre la structure acoustiquement résistive poreuse (30) et la couche réflectrice (32) en une pluralité d'alvéoles (36), chaque alvéole (36) contient plusieurs conduits (38) qui présentent chacun une première extrémité (38.1) obturée par une portion de la structure acoustiquement résistive poreuse (30), une deuxième extrémité (38.2) obturée par une portion de la couche réflectrice (32) **caractérisé en ce que** les conduits présentent chacun au moins une ouverture (40) écartée de la structure acoustiquement résistive poreuse (30) et configurée pour faire communiquer l'intérieur et l'extérieur du conduit (38).

2. Panneau pour le traitement acoustique selon la revendication 1, **caractérisé en ce qu'**un ratio entre une section de l'alvéole (36) et une section d'un conduit (38) est supérieur ou égal à 10, de préférence supérieur à 20.

3. Panneau pour le traitement acoustique selon la revendication précédente, **caractérisé en ce que** chaque conduit (38) a une section inférieure ou égale à 0,04 cm².

4. Panneau pour le traitement acoustique selon l'une des revendications précédentes, **caractérisé en ce que** chaque conduit (38) a une section constante entre les première et deuxième extrémités (38.1, 38.2).

5. Panneau pour le traitement acoustique selon l'une des revendications précédentes, **caractérisé en ce que** les conduits (38) sont rigides.

6. Panneau pour le traitement acoustique selon l'une des revendications précédentes, **caractérisé en ce que** chaque conduit (38) comprend une unique ouverture (40) qui se présente sous la forme d'une fente qui comprend une plus grande dimension orientée parallèlement à un axe du conduit (38).

7. Panneau pour le traitement acoustique selon la revendication précédente, **caractérisé en ce que** les ouvertures (40) de tous les conduits (38) d'une même alvéole (36) sont identiques et s'étendent à partir de la couche réflectrice (32) sur une longueur de l'ordre d'un tiers de la longueur totale des conduits (38).

8. Panneau pour le traitement acoustique selon l'une des revendications précédentes, **caractérisé en ce que** les alvéoles (36) sont délimitées par des cloisons (35) orientées selon une première direction et selon une deuxième direction perpendiculaire à la première direction et **en ce que** dans chaque alvéole (36), les conduits (38) sont positionnés selon des lignes parallèles à la première direction et selon des rangées parallèles à la deuxième direction.

9. Panneau pour le traitement acoustique selon l'une des revendications précédentes, **caractérisé en ce que** chaque conduit (38) a une section circulaire avec un diamètre compris entre 0,5 et 2 mm.

10. Aéronef comprenant un panneau pour le traitement acoustique selon l'une des revendications précédentes.

## Patentansprüche

1. Paneel zur Schalldämmung, umfassend eine poröse schalldämmende Struktur (30), die sich in Kontakt mit einer Außenumgebung befindet, in welcher sich im Betrieb Schallwellen ausbreiten, eine reflektierende Schicht (32) und wenigstens eine Wabenstruktur (34), die zwischen der porösen schalldämmenden Struktur (30) und der reflektierenden Schicht (32) positioniert ist und dafür ausgelegt ist, einen Bereich zwischen der porösen schalldämmenden Struktur (30) und der reflektierenden Schicht (32) in eine Vielzahl von Waben (36) aufzuteilen, wobei jede Wabe (36) mehrere Leitungen (38) enthält, welche jeweils ein erstes Ende (38.1), das durch einen Abschnitt der porösen schalldämmenden Struktur (30) verschlossen ist, und ein zweites Ende (38.2), das durch einen Abschnitt der reflektierenden Schicht (32) verschlossen ist, aufweisen,
**dadurch gekennzeichnet, dass** die Leitungen jeweils wenigstens eine Öffnung (40) aufweisen, die von der porösen schalldämmenden Struktur (30) entfernt ist und dafür ausgelegt ist, eine Verbindung zwischen dem Inneren und der Außenseite der Leitung (38) herzustellen.

2. Paneel zur Schalldämmung nach Anspruch 1, **dadurch gekennzeichnet, dass** ein Verhältnis zwischen einem Querschnitt der Wabe (36) und einem Querschnitt einer Leitung (38) größer oder gleich 10, vorzugsweise größer als 20 ist.

3. Paneel zur Schalldämmung nach dem vorhergehenden Anspruch, **dadurch gekennzeichnet, dass** jede Leitung (38) einen Querschnitt aufweist, der kleiner oder gleich 0,04 cm² ist.

4. Paneel zur Schalldämmung nach einem der vorhergehenden Ansprüche, **dadurch gekennzeichnet, dass** jede Leitung (38) zwischen dem ersten und dem zweiten Ende (38.1, 38.2) einen konstanten Querschnitt aufweist.

5. Paneel zur Schalldämmung nach einem der vorhergehenden Ansprüche, **dadurch gekennzeichnet, dass** die Leitungen (38) starr sind.

6. Paneel zur Schalldämmung nach einem der vorhergehenden Ansprüche, **dadurch gekennzeichnet, dass** jede Leitung (38) eine einzige Öffnung (40) umfasst, welche die Form eines Schlitzes aufweist, welcher eine größere Abmessung umfasst, die parallel zu einer Achse der Leitung (38) ausgerichtet ist.

7. Paneel zur Schalldämmung nach dem vorhergehenden Anspruch, **dadurch gekennzeichnet, dass** die Öffnungen (40) aller Leitungen (38) ein und derselben Wabe (36) identisch sind und sich von der reflektierenden Schicht (32) aus über eine Länge in der Größenordnung von einem Drittel der Gesamtlänge der Leitungen (38) erstrecken.

8. Paneel zur Schalldämmung nach einem der vorhergehenden Ansprüche, **dadurch gekennzeichnet, dass** die Waben (36) durch Trennwände (35) begrenzt sind, die in einer ersten Richtung und in einer zweiten Richtung, die zur ersten Richtung senkrecht ist, ausgerichtet sind, und dadurch, dass in jeder Wabe (36) die Leitungen (38) entlang von Linien, die zur ersten Richtung parallel sind, und entlang von Reihen, die zur zweiten Richtung parallel sind, positioniert sind.

9. Paneel zur Schalldämmung nach einem der vorhergehenden Ansprüche, **dadurch gekennzeichnet, dass** jede Leitung (38) einen kreisförmigen Querschnitt mit einem Durchmesser zwischen 0,5 und 2 mm aufweist.

10. Luftfahrzeug, welches ein Paneel zur Schalldämmung nach einem der vorhergehenden Ansprüche umfasst.

## Claims

1. Acoustic treatment panel comprising a porous acoustically resistive structure (30) in contact with an external environment in which during operation sound waves travel, a reflective layer (32) and at least one cellular structure (34) positioned between the porous acoustically resistive structure (30) and the reflective layer (32) and configured to compartmentalize a zone between the porous acoustically resistive structure (30) and the reflective layer (32) into a plurality of cells (36), each cell (36) contains several conduits (38) each of which has a first end (38.1) closed off by a portion of the porous acoustically resistive structure (30), a second end (38.2) closed off by a portion of the reflective layer (32), **characterized in that** the conduits each have at least one opening (40) set away from the porous acoustically resistive structure (30) and configured to cause the inside and the outside of the conduit (38) to communicate.

2. Acoustic treatment panel according to Claim 1, **characterized in that** a ratio between a cross section of the cell (36) and a cross section of a conduit (38) is greater than or equal to 10, and preferably greater than 20.

3. Acoustic treatment panel according to the preceding claim, **characterized in that** each conduit (38) has a cross section less than or equal to 0.04 cm².

4. Acoustic treatment panel according to one of the preceding claims, **characterized in that** each conduit (38) has a cross section that is constant between the first and second ends (38.1, 38.2).

5. Acoustic treatment panel according to one of the preceding claims, **characterized in that** the conduits (38) are rigid.

6. Acoustic treatment panel according to one of the preceding claims, **characterized in that** each conduit (38) comprises a single opening (40) which takes the form of a slot which comprises a longest dimension oriented parallel to an axis of the conduit (38).

7. Acoustic treatment panel according to the preceding claim, **characterized in that** the openings (40) of all the conduits (38) of one same cell (36) are identical and extend from the reflective layer (32) over a length of the order of one third of the total length of the conduits (38) .

8. Acoustic treatment panel according to one of the preceding claims, **characterized in that** the cells (36) are delimited by partitions (35) oriented in a first direction and in a second direction perpendicular to the first direction and **in that**, in each cell (36), the conduits (38) are positioned along lines parallel to the first direction and along rows parallel to the second direction.

9. Acoustic treatment panel according to one of the preceding claims, **characterized in that** each conduit (38) has a circular cross section with a diameter of between 0.5 and 2 mm.

10. Aircraft comprising an acoustic treatment panel according to one of the preceding claims.
